# EUROPÄISCHE PATENTSCHRIFT

(11) **EP 3 278 381 B1**
(45) Veröffentlichungstag und Bekanntmachung des Hinweises auf die Patenterteilung: **17.10.2018**
(21) Anmeldenummer: 16767157.7
(22) Anmeldetag: 31.08.2016
(51) Int. Cl.: H01M 2/20, B60L 11/18, H01R 31/08, H01M 2/34, H01H 85/00, H01R 13/68, H01R 13/24, H01H 85/02

(54) **STROMSCHIENE UND BATTERIEMODUL MIT SOLCH EINER STROMSCHIENE**
BUSBAR AND BATTERY MODULE HAVING SUCH A BUSBAR
BARRE CONDUCTRICE ET MODULE DE BATTERIE POURVU D'UNE TELLE BARRE CONDUCTRICE

(30) Priorität: 24.11.2015 EP 15196147
(43) Veröffentlichungstag der Anmeldung: 07.02.2018
(73) Patentinhaber: Nordfels GmbH, 4190 Bad Leonfelden (AT)
(72) Erfinder: REINGRUBER, Martin, 4191 Vorderweißenbach (AT); JENNER-BRAUNSCHMIED, Edmund, 4180 Zwettl an der Rodl (AT)
(74) Vertreter: Jell, Friedrich
(86) Internationale Anmeldenummer: PCT/EP2016/070557
(87) Internationale Veröffentlichungsnummer: WO 2017/088996

(56) Entgegenhaltungen:
- EP-A2- 2 711 493
- DE-A1-102011 007 319
- DE-A1-102012 205 021
- US-A1- 2015 050 531

## Beschreibung

### Technisches Gebiet

Die Erfindung betrifft eine Batterie, ein Batteriepack für die Batterie und eine Stromschiene hierfür zum Verbinden von Batteriezellen, mit einem elektrisch leitenden Metallblech und mit mindestens einem in das Metallblech mit Hilfe eines Trennverfahrens eingebrachten Blechstegs, der vom Metallblech absteht, wobei der Blechsteg einen Kontaktabschnitt zum elektrischen Verbinden mit einem Pol der Batteriezelle und einen als Schmelzsicherung ausgebildeten Sicherungsabschnitt aufweist, wobei der Sicherungsabschnitt als gewunden verlaufende Schraubenfeder ausgeführt ist.

### Stand der Technik

Stromschienen zum parallelen oder seriellen elektrischen Zusammenschalten von Batteriezellen sind aus dem Stand der Technik bekannt. Solche Stromschienen bedienen sich eines elektrisch leitenden Metallblechs und davon abstehenden Blechstegen, mit denen die Batteriezellen elektrisch verbunden sind. Hierzu weisen die Blechstege einen Kontaktabschnitt auf, der mit einem Pol einer Batteriezelle verschweißt ist. Die Blechstege werden mit Hilfe eines Trennverfahrens in das Metallblech eingebracht, beispielsweise eingeschnitten - was durch Stanzen oder Laserschneiden erfolgen kann.

Zudem ist es bei solchen Blechstegen bekannt (EP2337115A2), diese mit einem Sicherungsabschnitt zu versehen, der eine elektrische Schmelzsicherung am Blechsteg ausbildet und die daran angeschlossene Batteriezelle vor einer sicherheitskritischen Stromstärke schützt. Diese Schmelzsicherung wird durch eine Verjüngung des Querschnitts am Blechsteg realisiert. Nachteilig führt jedoch solch ein Einschnürungswiderstand zu einer Schwächung der mechanischen Festigkeit am Blechsteg, was bei Erschütterungen bzw. Vibrationen die Gefahr eines mechanischen Leitungsbruchs erhöht. Mit einer reduzierten Standfestigkeit der Stromschiene, insbesondere bei deren mobilen Verwendung, muss dementsprechend gerechnet werden.

Um diesem Nachteil zu begegnen, schlägt beispielsweise die EP2608243A1 vor, den Blechsteg im Sicherungsabschnitt mit einem Harz zu beschichten. Dies ist jedoch nicht nur konstruktiv vergleichsweise aufwendig, sondern kann nachteilig auch die Brandgefahr erhöhen, insbesondere bei deren Aktivierung.

Weitere aus dem Stand der Technik bekannte Stromschienen zum Verbinden von Batteriezellen sind in den Druckschriften DE 10 2011 007319 A1, US 2015/050531 A1 und DE 10 2012 205021 A1 offenbart.

### Darstellung der Erfindung

Die Erfindung wird durch die in Anspruch 1 genannten Merkmale definiert. Die Erfindung hat sich daher ausgehend vom eingangs geschilderten Stand der Technik die Aufgabe gestellt, eine Stromschiene zu schaffen, die standfest, konstruktiv einfach ist und dennoch eine hohe Brandsicherheit aufweist.

Die Erfindung löst die gestellte Aufgabe dadurch, dass der Sicherungsabschnitt als gewunden verlaufende Schraubenfeder ausgeführt ist.

Ist der Sicherungsabschnitt als gewunden verlaufende Schraubenfederausgeführt, so kann unter anderem die Steifigkeit im Sicherungsabschnitt vermindert werden - zudem ist es möglich, durch die dadurch gewährleistete erhöhte mehrdimensionale Beweglichkeit des Blechstegs Erschütterungen und Vibrationen besonders einfach und sicher aufzunehmen. Dies kann die Gefahr von mechanischen Leitungsbrüchen verringern und so die Standfestigkeit der Stromschiene im Vergleich zum Stand der Technik erhöhen. Zudem kann dieser Verlauf des Sicherungsabschnitts vergleichsweise konstruktiv einfach hergestellt werden - beispielsweise, indem dieser aus jenem Blechteil des Metallblechs gewickelt wird, der sich durch Einschneiden (Schereschneiden/Laserschneiden) in das Metallband ergibt. Die erfindungsgemäße Stromschiene und der Blechsteg können damit einstückig ausgebildet werden, womit beispielsweise eine kostengünstig herzustellende Stromschiene ermöglicht werden kann. Außerdem erfordert die Erfindung durch den als gewunden verlaufende Schraubenfeder ausgeführten Sicherungsabschnitt keine weiteren Maßnahmen oder Hilfsmittel zur Erhöhung der mechanischen Belastbarkeit - wodurch in weiterer Folge Maßnahmen zur Schwingungsdämpfung im Bereich des Sicherungsabschnitts, welche brandförderlich sein können vermeidbar sind. Die erfindungsgemäße Stromschiene kann daher auch eine besonders hohe Brandsicherheit gewährleisten. Zudem kann durch den als gewunden verlaufende Schraubfeder ausgeführten Sicherungsabschnitt eine axial auf die Batteriezellen wirkende Belastung standfest abgefedert und abgetragen werden, wodurch eine robuste, standfeste Stromschiene geschaffen werden kann.
Als besonders vorteilhaft kann sich die Erfindung herausstellen, wenn der Sicherungsabschnitt als Schraubenfeder ausgeführt ist. Eine durch axiales Auseinanderziehen erzeugte Schraubenfeder kann ein verbessertes Federverhalten zeigen. Das axiale Auseinanderziehen kann beispielsweise gleichzeitig mit dem elektrischen Kontaktieren oder stoffschlüssigen Fügen des Kontaktabschnitts des Blechstegs mit dem Pol der Batteriezelle erfolgen.

Die konstruktive Ausführung im Bereich des Sicherungsabschnitts kann weiter vereinfacht werden, wenn der Sicherungsabschnitt rechteckig gewunden oder spiralförmig gewunden verläuft. Dabei kann ein spiralförmig gewundener Verlauf im Vergleich mit einem rechteckig gewundenen Verlauf insbesondere eventuelle Singularitäten im Eckbereich des Blechstegs vermeiden - und auf diese Weise der Funktionalität der Schmelzsicherung förderlich sein.

Umläuft der Sicherungsabschnitt den Kontaktabschnitt gewunden, so kann der als gewunden verlaufende Schraubenfeder ausgeführte Sicherungsabschnitt auf konstruktiv einfache Weise ausgeführt werden, da beispielsweise eine einfache konzentrische Anordnung des Sicherungsabschnitts um den Kontaktabschnitt ermöglicht wird. Dabei können zudem enge Biegeradien im Sicherungsabschnitt vermieden werden und so eine insgesamt standfestere Stromschiene geschaffen werden.

Nimmt der Windungsdurchmesser des Sicherungsabschnitts vom Metallblech ausgehend in Richtung des Kontaktabschnitts ab, so kann auf elegante Weise der spezifische Widerstand des Sicherungsabschnitts über die Leitungslänge - bzw. die Steglänge - eingestellt werden. Auf die Verwendung eines als Sollbruchstelle wirkenden Einschnürungswiderstands kann verzichtet werden, sodass eine reduzierte Standfestigkeit der Stromschiene - wie dies im Stand der Technik vorkommt - nicht befürchtet werden muss.

Ist der Sicherungsabschnitt zudem als Schraubenzugdruckfeder ausgeführt, so kann eine Federung axial in beide Richtungen garantiert werden, wodurch die mechanische Belastbarkeit und die Standfestigkeit der Stromschiene weiter erhöht werden können.

Vorzugsweise kann der Sicherungsabschnitt als Blechstreifen ausgeführt sein, um damit - konstruktiv einfach gelöst - für eine ausreichende Leiterbahnbreite für eine Stromführung zu sorgen. Zudem können auf diese Weise einerseits eine hohe mechanische Stabilität, andererseits eine besonders reaktionsschnelle Schmelzsicherung auf konstruktiv einfache Weise ermöglicht werden.

Schließt der Sicherungsabschnitt an einem seiner Enden an das Metallblech und an seinem anderen Ende an den Kontaktabschnitt an, kann dies zu einer kompakten Ausführung am Blechsteg führen. Die konstruktive Ausgestaltung der Stromschiene ist damit weiter vereinfachbar.

Einfach herstellbar kann das Metallblech einen Nickelwerkstoff aufweisen. Außerdem kann sich ein Nickelwerkstoff durch seine verbesserte Schweißbarkeit mit einem Pol der Batteriezelle auszeichnen.

Vorzugsweise sind alle Blechstege des Metallblechs zum Verbinden mit der jeweiligen Batteriezelle gleich ausgeführt, damit jeweils eine Schmelzsicherung zwischen Metallblech und Pol verfügbar ist.

Der Sicherungsabschnitt kann als Kurzschluss-Schmelzsicherung ausgebildet sein, um damit die Batteriezelle nicht nur vor einer sicherheitskritischen Stromstärke zu schützen, sondern diese auch im thermischen Versagensfall elektrisch von den anderen Batteriezellen zu trennen.
Eine Kurzschluss-Schmelzsicherung kann die Folgen sowohl eines internen als auch eines externen Kurzschlusses der an die Stromschiene angeschlossenen Batteriezelle begrenzen. Ein interner Kurzschluss der Batteriezelle kann beispielsweise durch eine mechanische Überbelastung der Batteriezelle auftreten. Ein Kurzschlussstrom über die beschädigte Batteriezelle wird durch die erfindungsgemäße Stromschiene standfest verhindert, wodurch andere mit der Stromschiene elektrisch parallel verbundene Batteriezellen vor einem Versagensfall geschützt werden können. Zudem schützt die erfindungsgemäße Kurzschluss-Schmelzsicherung auch eine intakte Batteriezelle davor, im internen Kurzschlussfall einer anderen über die Stromschiene elektrisch parallel verbundenen Batteriezelle die intakte Batteriezelle zu beschädigen. Es kann daher eine Stromschiene geschaffen werden, die standfest Batteriezellen vor internen und externen Kurzschlüssen an der Stromschiene schützen kann. Dies kann insbesondere bei Batteriemodulen von Vorteil sein, bei denen mehrere Batteriezellen elektrisch parallel an einer Stromschiene angeschlossen sind.
Zudem kann im Gegensatz zum Stand der Technik durch die Auslegung der Schmelzsicherung als Kurzschluss-Schmelzsicherung der elektrische Widerstand zwischen Stromschiene und Batteriezelle klein gehalten werden, was nicht nur den Gesamtwiederstand im Hauptstrompfad vorteilhaft gering hält, sondern auch beim Entladen bzw. Laden für einen guten Spannungsausgleich zwischen den parallelen Batteriezellen sorgen kann.

Die erfindungsgemäße Stromschiene kann sich besonders für ein Batteriemodul mit mehreren Batteriezellen eignen, bei welchem die Stromschiene mit ihren Blechstegen der mit je einem Pol einer Batteriezelle verbunden ist.

Das Trennverfahren am Metallblech kann erleichtert werden, wenn die nebeneinander angeordneten Batteriezellen über die Stromschiene elektrisch parallel geschaltet werden - da sich damit unter anderem erhöhte Abmessungen am Metallblech ergeben können.

Eine besonders standfeste Kontaktierung zwischen Stromschiene und dem Pol der Batteriezelle kann ermöglicht werden, wenn der Kontaktabschnitt des Blechstegs mit dem Pol der Batteriezelle stoffschlüssig verbunden ist. Beispielsweise kann diese stoffschlüssige Verbindung durch ein Verschweißen, insbesondere Punkt oder Laserschweißen, erfolgen.

Vorteilhaft können mehrere elektrisch miteinander verbundene erfindungsgemäße Batteriemodule eine Batterie ergeben.

### Kurze Beschreibung der Zeichnungen

In den Figuren ist beispielsweise der Erfindungsgegenstand anhand eines Ausführungsbeispiels näher dargestellt. Es zeigen
- Fig. 1: eine Querschnittsansicht durch ein Batteriemodul,
- Fig. 2a und b: Detailansichten auf unterschiedliche erfindungsgemäße Stromschienen und
- Fig. 3: eine Draufsicht auf die Stromschiene eines Batteriemoduls.

### Wege zur Ausführung der Erfindung

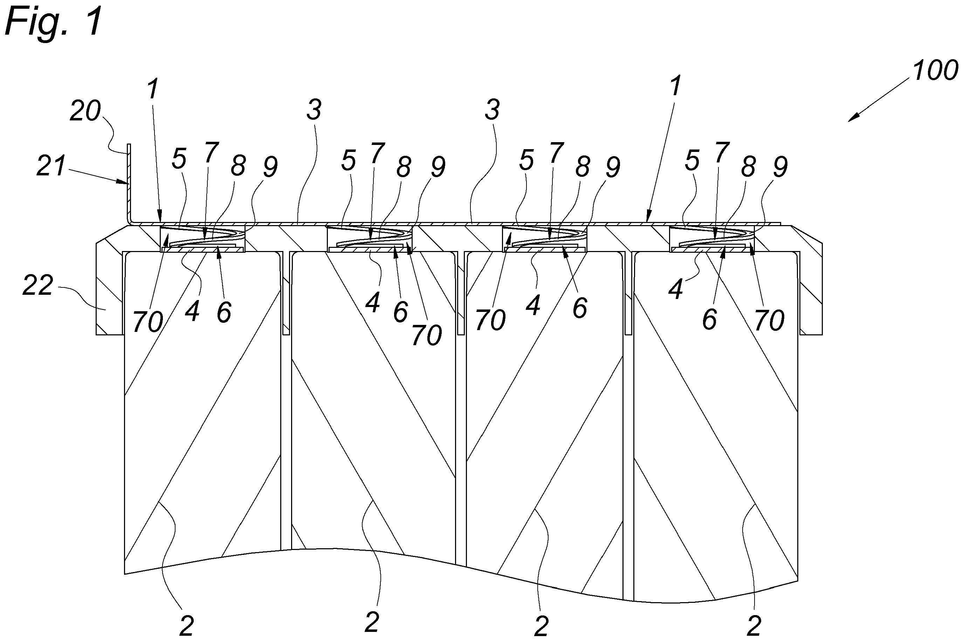

Nach Fig. 1 ist beispielsweise eine erfindungsgemäße Stromschiene 1 zum Verbinden von Batteriezellen 2 gezeigt. Die Stromschiene 1 ist dabei als Metallblech 3, nämlich Nickelblech, ausgeführt, um eine elektrisch leitende Verbindung zwischen den Polen 4 der Batteriezellen 2 herzustellen. Dafür weist das Metallblech 3 einen abstehenden Blechsteg 5 auf, der hierfür durch ein Trennverfahren (wie etwa Stanzen) aus dem Metallblech 3 teilweise herausgetrennt wurde - dieser Blechsteg 5 steht also aus der Blechebene des Metallblechs 3 ab. Der Blechsteg 5 weist einen Kontaktabschnitt 6 auf, welcher die elektrische Verbindung zwischen Stromschiene 1 und dem jeweiligen Pol 4 der Batteriezellen 2 ausbildet. Zudem weist der Blechsteg 5 einen Sicherungsabschnitt 7 auf, welcher als Schmelzsicherung 8 ausgebildet ist - und die elektrische Verbindung zwischen Stromschiene 1 und dem jeweiligen Pol 4 der Batteriezellen 2 beispielsweise im Falle eines Überstroms oder einer Überhitzung trennt. Der Sicherungsabschnitt 7 ist dabei von seinem Anfang am Metallblech 3 zu seinem Ende am Pol 4 als gewunden verlaufende Schraubenfeder 70 ausgebildet. Dadurch kann ein vergleichsweise beweglicher Blechsteg geschaffen werden, der außerdem die Stromschiene 1 standfest gegenüber mechanischen Brüchen schützen kann. Die erfindungsgemäße Stromschiene 1 eignet sich daher besonders gut für eine mobile Verwendung. Zudem entsteht durch den als gewunden verlaufende Schraubenfeder70ausgeführten Sicherungsabschnitt 7 eine vergleichsweise lange Leitungslänge am Blechsteg 5, über welche Eigenschaft der elektrische Widerstand und damit die Parameter der Schmelzsicherung besonders gut eingestellt werden können - im Gegensatz zum Stand der Technik ist es dadurch möglich, auf einen Einschnürungswiderstand zu verzichten. Ein als mechanische Sollbruchstelle wirkender Einschnürungswiderstand muss also beim Sicherungsabschnitt 7 nicht vorgesehen werden. Erfindungsgemäß ist also eine besonders standfeste - und in ihrer Herstellung auch kostengünstige - Stromschiene 1 geschaffen.

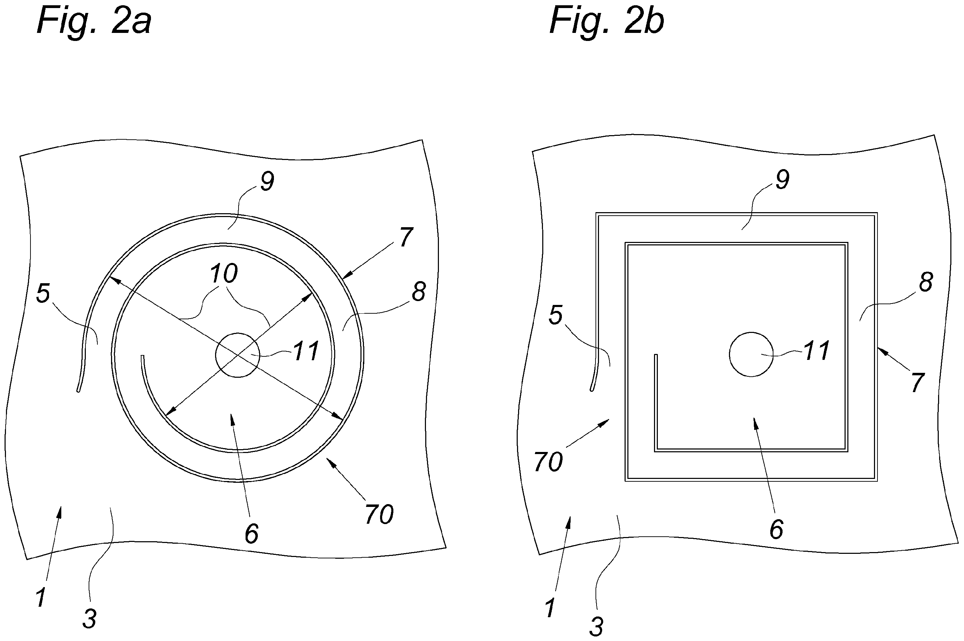

In Fig. 2a und 2b sind zwei Detailansichten auf die Stromschiene 1 dargestellt, wobei Fig. 2a eine Stromschiene 1 mit spiralförmig gewundenem Sicherungsabschnitt 7 und Fig. 2b eine Stromschiene 1 mit rechteckig gewundenem Sicherungsabschnitt 7 zeigt. Der Sicherungsabschnitt 7 schließt an einem seiner Enden an das Metallblech 3 und am seinem anderen Ende an den Kontaktabschnitt 6 an, welcher die elektrische Verbindung zum Pol 4 der Batteriezelle 2 herstellt. Auch ist ein ovalförmig gewundener Sicherungsabschnitt vorstellbar, was jedoch nicht näher dargestellt ist. Im Allgemeinen wird erwähnt, dass die Schraubenfederetwa oval, rechteckig, dreieckig und tropfenförmig gewunden verlaufen kann.

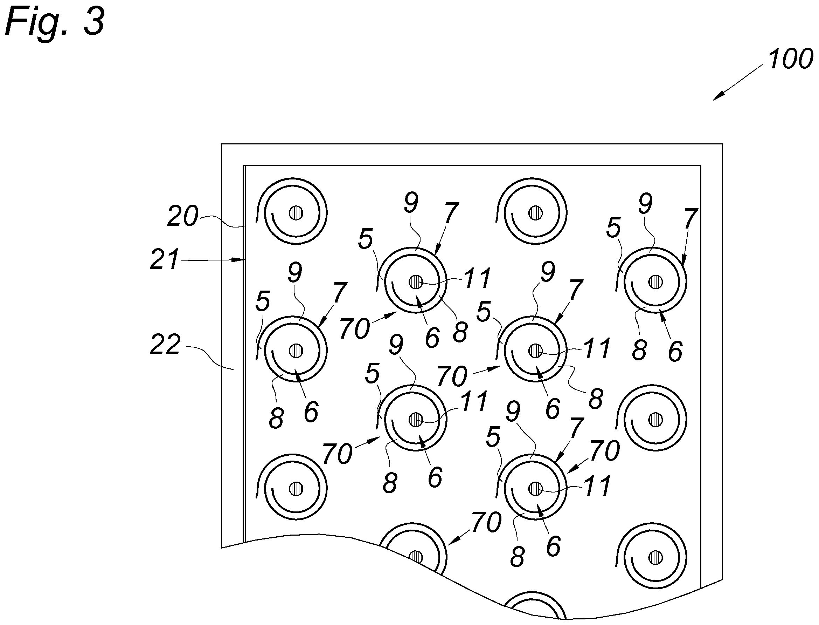

Der Kontaktabschnitt 6 wird vom Sicherungsabschnitt 7 gewunden umlaufen. Dies ist insbesondere aus den Draufsichten in den Figuren 2a, 2b und Fig. 3erkennbar. Der Sicherungsabschnitt 7 ist demgemäß als gewunden verlaufende Schraubenfeder 70 ausgeführt. Der Sicherungsabschnitt 7 ist als Schraubenfeder 70 ausgeführt, wobei die Schraubenfeder 70 dann zum Kontaktabschnitt 6 in axialer Richtung konisch zulaufenden ist. Dies ist insbesondere der mehrdimensionalen Beweglichkeit des Sicherungsabschnitts 7 - und somit seiner Standfestigkeit - förderlich. Eine derartige Stromschiene 1 ist in Fig. 1 dargestellt. Um einen solchen schraubenfederförmigen Verlauf zu erreichen, muss der Windungsdurchmesser 10 des Sicherungsabschnitts 7 bzw. des Blechstreifens 9 vom Metallblech 3 ausgehend zum Kontaktabschnitt 6 hin abnehmen (wie in Fig. 2 dargestellt). Insbesondere sind derartige Federn 70 als Schraubenzugdruckfedern ausgeführt, wodurch eine maximale Beweglichkeit in beiden axialen Richtungen erreicht wird.

Zudem ist der Sicherungsabschnitt 7 als Blechstreifen 9 ausgeführt, wie dies in den Fig. 2a und 2b erkannt werden kann. Insbesondere hat dieser Blechstreifen 9 über seine gesamte Länge eine konstante Breite, um die Sicherung 8 reproduzierbar gestalten zu können.

Alle in der Stromschiene 1 vorgesehenen Blechstege 5 des Metallblechs 3 sind zum Verbinden mit der jeweiligen Batteriezelle 2 vorzugsweise ident ausgeführt. Dies kann auch der Draufsicht in Fig. 3 entnommen werden. Durch die gleiche Ausführung aller Blechstege 5 kann für jede elektrische Verbindung zwischen den Polen 4 der Batteriezellen 2 und dem Metallblech 3 der Stromschiene 1 ein Sicherungsabschnitt 7 mit einer Schmelzsicherung 8 vorgesehen werden. Dadurch kann für alle Batteriezellen 2 ein Sicherungsverhalten - und zwar unabhängig voneinander, was sicherheitstechnische Vorteile ergibt - gewährleistet werden.

Der Sicherungsabschnitt 7 ist dabei als elektrische Schmelzsicherung 8, nämlich als Kurzschluss-Schmelzsicherung ausgeführt. Eine elektrische Schmelzsicherung 8 könnte so etwa durch einen Überstrom zur Batteriezelle 2 oder aus der Batteriezelle 2 ausgelöst werden und somit die betroffene Batteriezelle 2 von der Stromschiene 1 trennen.
Zur Kontaktierung der Stromschiene 1 endet diese in einer abgekanteten Blechlasche 20, welche eine Kontaktfläche 21 ausbildet, wie in Fig. 1 zu erkennen ist.

Auch ist in Fig. 1 eine Querschnittsansicht auf ein Batteriemodul 100 gezeigt, in welchem mehrere Batteriezellen 2 mit einer Stromschiene 1 elektrisch verbunden sind. Die elektrische Verbindung wird dabei jeweils zwischen dem Pol 4 einer Batteriezelle 2 und dem Kontaktabschnitt 6 des jeweiligen zur Batteriezelle 2 zugehörenden Blechstegs 5 hergestellt. Die Batteriezellen 2 sind dabei in dem Batteriemodul 100 nebeneinander angeordnet und gleichgepolt ausgerichtet, also elektrisch parallel geschaltet. Die Batteriezellen 2 können zudem durch einen Batterierahmen 22 in ihrer Position gehalten werden.

Die Kontaktabschnitte 6 der jeweiligen Blechstege 5 sind stoffschlüssig mit dem zugehörigen Pol 4 der Batteriezelle 2 verbunden, um einen geringen Kontaktwiderstand zu garantieren und eine standfeste Verbindung zu gewährleisten. Diese stoffschlüssige Verbindung wird - unter anderem, weil kostengünstig herzustellen - insbesondere durch einen Schweißpunkt 11 erzeugt.

Mehrere erfindungsgemäße Batteriemodule 100 können so zu einer Batterie zusammengeschaltet werden. Dabei kann die gewünschte Spannung und Kapazität bzw. Leistung der Batterie durch Parallel- und Seriell-Schaltung der Batteriemodule 100 eingestellt werden.

## Patentansprüche

1. Stromschiene zum Verbinden von Batteriezellen (2), mit einem elektrisch leitenden Metallblech (3) und mit mindestens einem in das Metallblech (3) mit Hilfe eines Trennverfahrens eingebrachten Blechsteg (5), der vom Metallblech (3) absteht, wobei der Blechsteg (5) einen Kontaktabschnitt (6) zum elektrischen Verbinden mit einem Pol (4) der Batteriezelle (2) und einen als Schmelzsicherung (8) ausgebildeten Sicherungsabschnitt (7) aufweist, **dadurch gekennzeichnet, dass** der Sicherungsabschnitt (7) als gewunden verlaufende Schraubenfeder (70) ausgeführt ist.

2. Stromschiene nach Anspruch 1, **dadurch gekennzeichnet, dass** der Sicherungsabschnitt (7) rechteckig gewunden oder spiralförmig gewunden verläuft.

3. Stromschiene nach Anspruch 1 oder 2, **dadurch gekennzeichnet, dass** der Sicherungsabschnitt (7) den Kontaktabschnitt (6) gewunden umläuft.

4. Stromschiene nach einem der Ansprüche 1 bis 3, **dadurch gekennzeichnet, dass** der Windungsdurchmesser (10) des Sicherungsabschnitts (7) vom Metallblech (3) ausgehend in Richtung des Kontaktabschnitts (6) abnimmt.

5. Stromschiene nach einem der Ansprüche 1 bis 4, **dadurch gekennzeichnet, dass** der Sicherungsabschnitt (7) als Schraubenzugdruckfeder ausgeführt ist.

6. Stromschiene nach einem der Ansprüche 1 bis 5, **dadurch gekennzeichnet, dass** der Sicherungsabschnitt (7) als Blechstreifen (9) ausgeführt ist.

7. Stromschiene nach einem der Ansprüche 1 bis 6, **dadurch gekennzeichnet, dass** der Sicherungsabschnitt (7) an einem seiner Enden an das Metallblech (3) und an seinem anderen Ende an den Kontaktabschnitt (6) anschließt.

8. Stromschiene nach einem der Ansprüche 1 bis 7, **dadurch gekennzeichnet, dass** alle Blechstege (5) des Metallblechs (3) zum Verbinden mit der jeweiligen Batteriezelle (2) gleich ausgeführt sind.

9. Stromschiene nach einem der Ansprüche 1 bis 8, **dadurch gekennzeichnet, dass** der Sicherungsabschnitt (7) als Kurzschluss-Schmelzsicherung (8) ausgebildet ist.

10. Batteriemodul mit mehreren Batteriezellen (2) und mit einer Stromschiene (1) nach einem der Ansprüche 1 bis 9, wobei die Stromschiene (1) mit ihren Blechstegen (5) mit je einem Pol (4) einer Batteriezelle (2) verbunden ist.

11. Batteriemodul nach Anspruch 10, **dadurch gekennzeichnet, dass** die nebeneinander angeordneten Batteriezellen (2) über die Stromschiene (1) elektrisch parallel geschaltet werden.

12. Batterie mit mehreren elektrisch miteinander verbundenen Batteriemodulen (100) nach einem der Ansprüche 10 bis 11.

## Claims

1. A busbar for connecting battery cells (2), having an electrically conductive metal sheet (3) and having at least one sheet metal connector piece (5), which is incorporated into the metal sheet (3) with the aid of a cutting method and which protrudes from the metal sheet (3); the sheet metal connector piece (5) has a contacting part (6) for electrically connecting to a pole (4) of the battery cell (2) and a safety part (7) embodied in the form of a fuse (8), **characterized in that** the safety part (7) is embodied in the form of a coiled helical spring (70).

2. The busbar according to claim 1, **characterized in that** the safety part (7) is coiled in a square or spiral shape.

3. The busbar according to claim 1 or 2, **characterized in that** the safety part (7) is coiled around the contacting part (6).

4. The busbar according to one of claims 1 through 3, **characterized in that** the coil diameter (10) of the safety part (7) decreases in the direction of the contacting part (6) starting from the metal sheet (3).

5. The busbar according to one of claims 1 through 4, **characterized in that** the safety part (7) is embodied in the form of a helical tension/compression spring.

6. The busbar according to one of claims 1 through 5, **characterized in that** the safety part (7) is embodied in the form of a sheet metal strip (9).

7. The busbar according to one of claims 1 through 6, **characterized in that** at one of its ends, the safety part (7) adjoins the metal sheet (3) and at its other end, it adjoins the contacting part (6).

8. The busbar according to one of claims 1 through 7, **characterized in that** all of the sheet metal connector pieces (5) of the metal sheet (3) are uniformly embodied for connection to the respective battery cell (2).

9. The busbar according to one of claims 1 through 8, **characterized in that** the safety part (7) is embodied in the form of a short-circuit fuse (8).

10. A battery module having a plurality of battery cells (2) and having a busbar (1) according to one of claims 1 through 9, wherein the busbar (1) is connected with each of its sheet metal connector pieces (5) to a respective pole (4) of a battery cell (2).

11. The battery module according to claim 10, **characterized in that** the battery cells (2) positioned next to one another are electrically connected in parallel fashion via the busbar (1).

12. A battery having several battery modules (100) according to the one of claims 10 to 11, which are electrically connected to one another.

## Revendications

1. Barre collectrice pour la connexion de cellules de batterie (2), comportant une tôle métallique (3) conductrice électrique et au moins une aile en tôle (5) formée dans la tôle métallique (3) par un procédé de découpe et qui dépasse de la tôle métallique (3), l'aile en tôle (5) présentant une partie de contact (6) pour la connexion électrique à un pôle (4) de la cellule de batterie (2) et une partie de sécurité (7) réalisée sous la forme d'un fusible (8), **caractérisée en ce que** la partie de sécurité (7) est réalisée comme un ressort hélicoïdal (70) enroulé.

2. Barre collectrice selon la revendication 1, **caractérisée en ce que** la partie de sécurité (7) est enroulée en spires carrées ou en spirale.

3. Barre collectrice selon la revendication 1 ou 2, **caractérisée en ce que** la partie de sécurité (7) s'enroule autour de la partie de contact (6).

4. Barre collectrice selon l'une des revendications 1 à 3, **caractérisée en ce que** le diamètre d'enroulement (10) de la partie de sécurité (7) diminue de la tôle métallique (3) vers la partie de contact (6).

5. Barre collectrice selon l'une des revendications 1 à 4, **caractérisée en ce que** la partie de sécurité (7) est conformée comme un ressort hélicoïdal de traction et de compression.

6. Barre collectrice selon l'une des revendications 1 à 5, **caractérisée en ce que** la partie de sécurité (7) est réalisée comme une bande de tôle (9).

7. Barre collectrice selon l'une des revendications 1 à 6, **caractérisée en ce que** la partie de sécurité (7) se raccorde à une extrémité à la tôle métallique (3) et à l'autre extrémité à la partie de contact (6).

8. Barre collectrice selon l'une des revendications 1 à 7, **caractérisée en ce que** toutes les ailes en tôle (5) de la tôle métallique (3) sont identiques en vue de la connexion aux cellules de batterie (2) correspondantes.

9. Barre collectrice selon l'une des revendications 1 à 8, **caractérisée en ce que** la partie de sécurité (7) est conçue comme un fusible à court-circuit (8).

10. Module de batterie comprenant plusieurs cellules de batterie (2) et une barre collectrice (1) selon l'une des revendications 1 à 9, dans lequel la barre collectrice (1) est connectée par chacune de ses ailes de tôle (5) à un pôle (4) respectif d'une cellule de batterie (2).

11. Module de batterie selon la revendication 10, **caractérisée en ce que** les cellules de batterie (2) disposées les unes à côté des autres sont connectées électriquement en parallèle par la barre collectrice (1).

12. Batterie mit comprenant plusieurs modules de batterie (100) selon l'une des revendications 10 à 11 connectés électriquement les uns aux autres.
